# EUROPÄISCHE PATENTANMELDUNG

(11) **EP 0 679 463 A1**
(43) Veröffentlichungstag der Anmeldung: **02.11.1995**
(21) Anmeldenummer: 95105611.8
(22) Anmeldetag: 13.04.1995
(51) Int. Cl.: B23B 3/16

(54) **Drehmaschine**

(30) Priorität: 28.04.1994 DE 4414856
(71) Anmelder: Max Müller Werkzeugmaschinen GmbH, D-30179 Hannover (DE)
(72) Erfinder: Schlie, Frithjof, D-30659 Hannover (DE)

(57) **Zusammenfassung**

Bei einer Drehmaschine mit einem auf einem Kreuzschlitten angeordneten Werkzeugturm (19), der auf gegenüberliegenden Seiten eine Werkzeugaufnahme für Drehwerkzeuge und einen Querschlitten (23) mit einer darin gelagerten Frässpindel (24) trägt, soll zur besseren Zugänglichkeit das Maschinenbett als Schrägbett (8) ausgeführt sein. Die Führungsbahnbelastung einer derartigen Drehmaschine soll dadurch verringert werden, daß die Frässpindel (24), der Querschlitten (23) und der Werkzeugturm (19) möglichst kompakt ausgeführt und Gewicht eingespart wird. Dies wird durch die Anordnung des Werkzeugspindelmotors (27) am Bettschlitten und durch die gleichzeitige Nutzung des Werkzeugspindelmotors (27) für die Schwenkbewegung des Werkzeugturms (19) erreicht.

## Beschreibung

Die Erfindung betrifft eine Drehmaschine mit einer Werkstückspindel und mit einem Maschinenbett, das Längsführungen in Achsrichtung der Werkstückspindel aufweist, mit einem Bettschlitten, der auf diesen Längsführungen verschieblich ist und der seinerseits Planführungen für einen quer zur Werkstückspindelachse verschieblichen Planschlitten trägt, mit einem auf dem Planschlitten angeordneten Werkzeugturm, der um eine Achse drehbar ist, die senkrecht zu den Plan- und Längsführungen ausgerichtet ist, wobei der Werkzeugturm auf einer Seite eine Aufnahme für nicht rotierende Werkzeuge und auf der gegenüberliegenden Seite Querführungen für einen Werkzeugschlitten trägt, der parallel zur Schwenkachse des Werkzeugturms verschieblich ist und eine rotierend angetriebene Werkzeugspindel trägt.

Eine derartige Drehmaschine ist aus DE 34 10 276 A1 bekannt. Auf einem Kreuzschlitten ist ein Werkzeugturm aufgebaut, der einen Vertikalschlitten mit einer Frässpindel und eine Aufnahme für eine Werkzeugeinheit auf gegenüberliegenden Seiten trägt. Es handelt sich dabei um eine Flachbettmaschine, bei der die Führungsbahnen des Bett- und Planschlittens in horizontalen Ebenen liegen und der Werkzeugturm sich senkrecht über diesen Führungsbahnen erstreckt. Dadurch werden die Massenkräfte des Werkzeugturms und der Schlitten gut in das Maschinenbett eingeleitet. Der Aufbau hat jedoch den Nachteil, daß die Drehmaschine sehr breit ausladend ist und dadurch die Zugänglichkeit zum Spannfutter und den Werkzeugaufnahmen und die Beobachtung des Bearbeitungsprozesses erschwert ist. Die Genauigkeit wird zudem durch die auf Schlitten und Führungen liegenbleibenden, heißen Späne beeinträchtigt.

Diese Nachteile können durch die an sich bekannte Schrägbettbauweise der Drehmaschine vermieden werden. Dabei rufen der Werkzeugturm und der Vertikalschlitten mit der Frässpindel jedoch erhebliche Kippmomente hervor, die die Führungsbahnen nachteilig belasten und die Genauigkeit der Drehmaschine beeinträchtigen können. Der Erfindung liegt daher die Aufgabe zugrunde bei guter Zugänglichkeit zur Drehmaschine die auf Plan- und Längsschlitten wirkenden Kippmomente möglichst klein zu halten.

Die Aufgabe wird durch die Merkmale des Hauptanspruchs gelöst.

Durch die Anordnung des Werkzeugspindelantriebmotors am Bettschlitten wird das Gewicht des Werkzeugturms erheblich verringert. Auf die Verwendung eines eigenen Antriebmotors für die Schwenkbewegung des Werkzeugturms wird ganz verzichtet.

Eine weitere Möglichkeit zur Gewichtseinsparung liegt darin, die Bauteile und Bauaggregate möglichst kompakt auszuführen. Es wurde deshalb auf die Anordnung von Drehdurchführungen für die Spannmittelzufuhr zur Werkzeugspindel verzichtet und eine Kupplung der Druckmittelleitungen bei Spindelstillstand gewählt, die keine zusätzliche Baulänge der Werkzeugspindel benötigt. Kleine Werkzeugspindelabmessungen bedeuten kleine Querschlittenabmessungen und damit eine Verringerung der Werkzeugturmabmessungen.

Die Verwendung von Keilwellen insbesondere Vielkeilwellen und Kegeltrieben erlaubt, auch große Drehmomente zu übertragen, wobei der Wirkungsgrad des Getriebezugs gegenüber anderen Lösungen hoch ist.

Bei einem auf der Keilwelle fest angeordneten Kegelrad und in Planrichtung verschieblicher Keilwelle wird vermieden, daß die Keilwelle in den Arbeitsraum ragt, wenn der Planschlitten sich von der Spindeldrehachse entfernt.

Die durch die Masse des Werkzeugturms unvermeidlichen Kippmomente können durch eine Momentenstütze am Bettschlitten aufgefangen werden.

Die Erfindung wird anhand der nachfolgenden Zeichnungen näher erläutert. Es zeigen:
- Fig. 1: eine Gesamtansicht der erfindungsgemäßen Drehmaschine
- Fig. 2: eine Stirnansicht der Drehmaschine mit Werkzeugspindelantrieb
- Fig. 3: einen Schnitt durch den Werkzeugturm der Drehmaschine
- Fig. 4: die Werkzeugspindel im Längsschnitt gemäß Linie IV-IV der Fig. 1
- Fig. 5: einen Querschnitt der Werkzeugspindel gemäß Linie V-V der Fig. 4
- Fig. 6: die Stillsetzeinrichtung der Werkzeugspindel

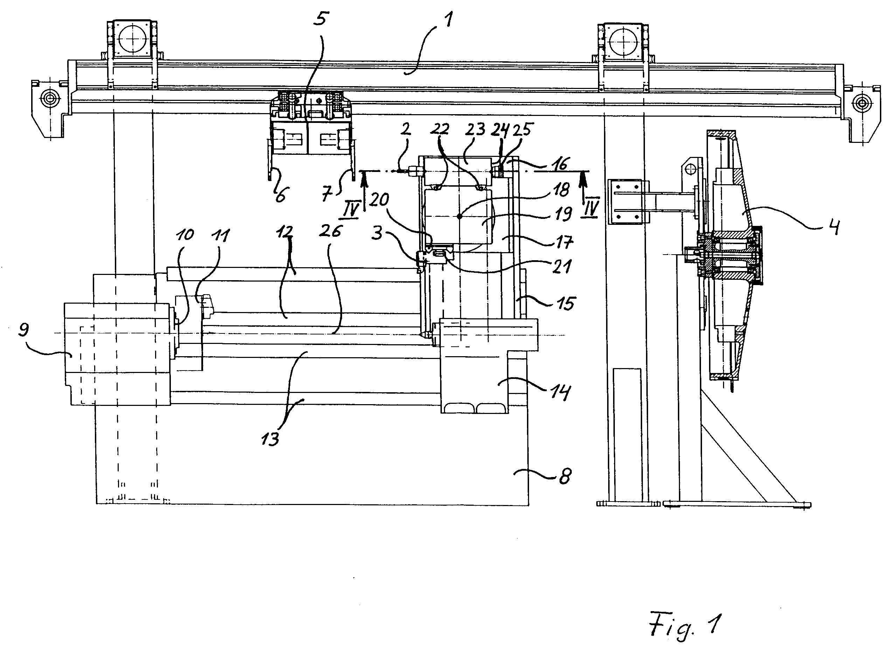

Fig. 1 zeigt den grundsätzlichen Aufbau einer Drehmaschine mit einem Portal 1, das die Werkzeuge 2,3 aus einem Werkzeugmagazin 4 mittels eines am Portal 1 geführten Doppelgreifers 5 entnimmt und in die in Spindelachsrichtung variable Werkzeugwechselposition transportiert. Der Doppelgreifer besitzt eine Spannzange 6 zur Entnahme des Drehwerkzeuges 3 oder des Bohrwerkzeuges 2 und eine Spannzange 7 für das neu einzuwechselnde Werkzeug. Auf dem Maschinenbett 8 ist ein Spindelkasten 9 angeordnet, in dem die Werkstückspindel 10 gelagert ist, an der ein Werkstückspannfutter 11 befestigt werden kann. Das Maschinenbett 8 trägt Längsführungen 12,13 in einer zur horizontalen geneigten Ebene. Auf der unteren Längsführung 13 ist in Fig. 1 beispielsweise ein Reitstock 14 angeordnet, während die obere Längsführung 12 den Bettschlitten 15 trägt. Der Bettschlitten 15 hat an der Oberseite Planführungen 16, auf denen der Planschlitten 17 in X-Achsenrichtung verschieblich ist. Der Planschlitten 17 trägt einen um eine Schwenkachse 18 schwenkbaren Werkzeugturm 19, der an einer Seite eine Werkzeugaufnahme 20 für nicht rotierend angetriebene Drehwerkzeuge 21 und an der gegenüberliegenden Seite Querführungen 22 für einen Querschlitten 23 besitzt, in dem eine Werkzeugspindel 24 befestigt ist. In die gegenüberliegenden Stirnseiten der Werkzeugspindel 24 kann jeweils ein rotierend antreibbares Werkzeug 2,25 eingesetzt werden. Die Anordnung hat den Vorteil, daß sich nur jeweils ein Werkzeug gleichzeitig im Arbeitsraum befindet, das durch die Schwenkmöglichkeit des Werkzeugturms 19 jede beliebige Richtung zur Werkstuckdrehachse 26 einnehmen kann. Die Nebenzeiten für den Werkzeugwechsel werden in vorteilhafter Weise dadurch verkürzt, daß lediglich der Planschlitten 17 in eine Wechselposition gefahren werden muß, weil der Werkzeugwechsel an der vom Arbeitsraum abgewandten Seite des Werkzeugturms 19 in jeder Stellung des Bettschlittens 15 in Spindelachsrichtung erfolgen kann.

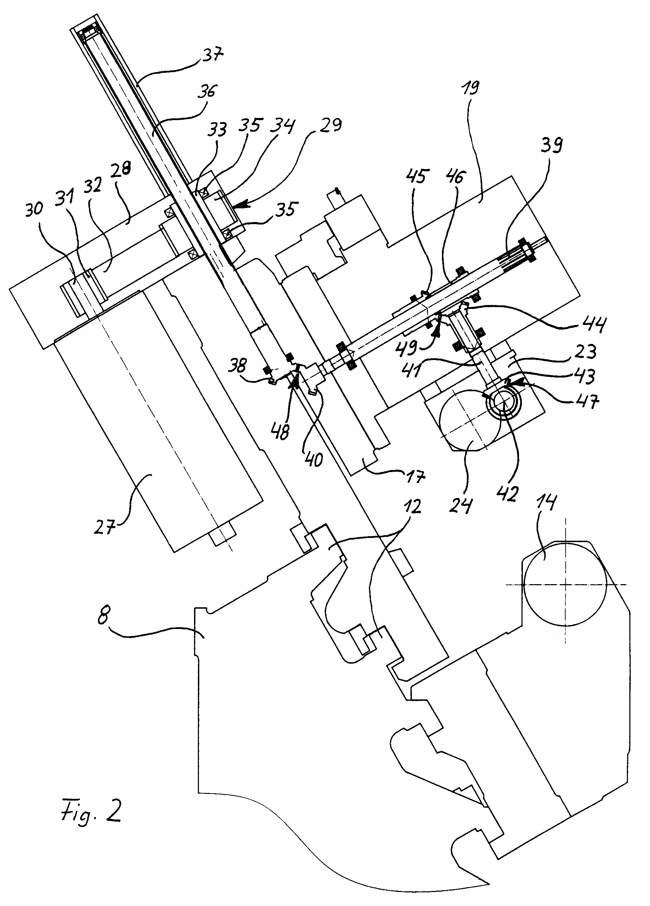

Fig. 2 zeigt einen schematischen Querschnitt der Drehmaschine mit Blick auf den Reitstock 14. An dem auf den Längsführungen 12 des Maschinenbettes 8 geführten Bettschlitten 15 ist der Werkzeugspindelmotor 27 über einen Träger 28 befestigt, der den Zahnriementrieb 29 für den Werkzeugspindelantrieb bestehend aus einem auf der Motorwelle 30 gelagertem Zahnritzel 31, dem Zahnriemen 32 und einem auf einer Hülse 33 befestigten Antriebszahnrad 34 aufnimmt, wobei die Hülse 33 mittels Wälzlager 35 im Träger 28 drehbar gelagert ist. Die Hülse 33 besitzt eine Bohrung mit Vielkeilprofil und wird von einer Vielkeilwelle 36 durchdrungen. Das freie Ende der Vielkeilwelle 36 wird durch eine rohrförmige Abdeckung 37 geschützt. Auf dem inneren Ende der Vielkeilwelle 36 ist ein Abtriebskegelrad 38 befestigt, das im Planschlitten 17 drehbar gelagert ist. Eine weitere Vielkeilwelle 39 ist unverschieblich im Werkzeugturm 19 drehbar gelagert, die an ihrem unteren Ende ein Antriebskegelrad 40 trägt, das mit dem Abtriebskegelrad 38 in Eingriff steht. An dem Werkzeugturm 19 ist der Querschlitten 23 verschieblich geführt, in dem neben der Werkzeugspindel 24 zwei Wellen 41,42 gelagert sind, von denen die eine Welle 41 an ihren beiden Enden Kegelräder 43,44 trägt. Das in den Werkzeugturm 19 ragende Wellenende trägt ein Kegelrad 44, das mit der kegeligen Verzahnung 45 einer Schiebehülse 46 in Eingriff steht. Die Schiebehülse 46 ist im Querschlitten 23 drehbar gelagert und auf der Vielkeilwelle 39 verschieblich. Auf diese Weise kann der Werkzeugspindelmotor 27 die Werkzeugspindel 24 unabhängig von ihrer Position in jeder Lage antreiben.

Das Abtriebskegelrad 38 bildet mit dem Antriebskegelrad 40 ein erstes Winkelgetriebe 48 und die kegelige Verzahnung 45 der Schiebehülse 46 mit dem Kegelrad 44 ein zweites Winkelgetriebe 49. Bei dem dargestellten Beispiel wird die Übertragung des Antriebsmoments durch ein drittes Kegelgetriebe 47, eine Zwischenwelle 42 und Stirnzahnräder bewirkt.

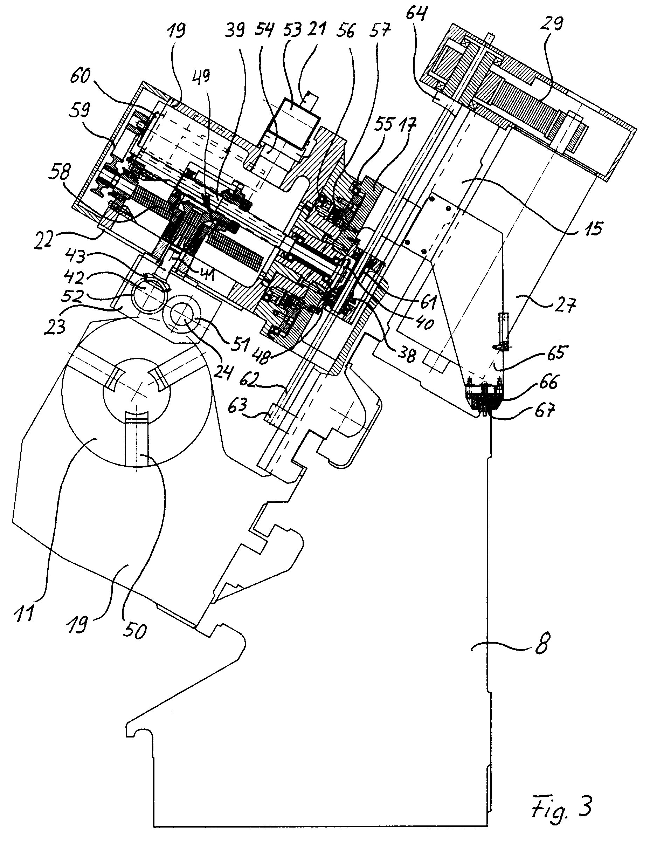

Fig. 3 zeigt denselben Querschnitt durch die erfindungsgemäße Drehmaschine mit Blick auf den Spindelkasten 19 und einen modifizierten Getriebezug für den Werkzeugspindelantrieb. In dieser Ansicht wird das Werkstückspannfutter 11 mit den Spannbacken 50 erkennbar. An dem Werkzeugturm 19 ist der Querschlitten 23 auf den Querführungen 22 geführt, der die Werkzeugspindel 24 und eine Welle 42 trägt. Auf der Werkzeugspindel 24 und auf der Welle 42 sind Stirnzahnräder 51,52 angeordnet, die miteinander in Eingriff stehen.

Auf der gegenüberliegenden Seite des Werkzeugturms 19 ist ein Drehwerkzeug 21 in einem Werkzeughalter 53 angeordnet, der von einer Werkzeugspanneinrichtung 54 gespannt wird. Der Werkzeugturm 19 ist gegenüber dem Planschlitten 17 mit Wälzlagern 55,56 drehbar gelagert und mit hydraulisch betätigten Planzahnringen 57 in seiner jeweiligen Drehlage fixierbar.

Der Querschlitten 23 wird durch eine Gewindespindel 58 bewegt, die über einen Zahnriemenantrieb 59 von einem Vorschubmotor 60 angetrieben wird.

Die Werkzeugspindel 24 wird wie bereits in Verbindung mit Fig. 2 beschrieben über Stirnzahnräder 51,52, Kegelrad 43, Zwischenwelle 41, Winkelgetriebe 49, die Keilwelle 39 und ein weiteres Winkelgetriebe 48 angetrieben. Im Unterschied zum Getriebezug nach Fig. 2 ist das Antriebskegelrad 38 hier auf einer Vielkeilbuchse 61 festgelegt, die mit dem Planschlitten 17 verbunden ist. Durch die Vielkeilbuchse 61 ist eine Keilwelle 62 geführt, die an ihren beiden Enden in Lagerböcken 63,64 am Bettschlitten 15 abgestützt ist. Die Keilwelle 62 wird wieder durch einen Zahnriementrieb 29 von dem num. gesteuerten Werkzeugspindelmotor 27 angetrieben.

An dem auskragenden Ende des Bettschlittens 15 ist eine Stütze 65 angeschraubt, die sich über einen Rollenschuh 66 und eine Führungsleiste 67 am Maschinenbett 8 abstützt.

Wenn die Werkzeugspindel 24 festgehalten wird, verbindet das Winkelgetriebe 49 den Werkzeugturm 19 mit der Keilwelle 39. Bei gelösten Planzahnringen 57 dreht das Antriebskegelrad 40 daher den Werkzeugturm 19.

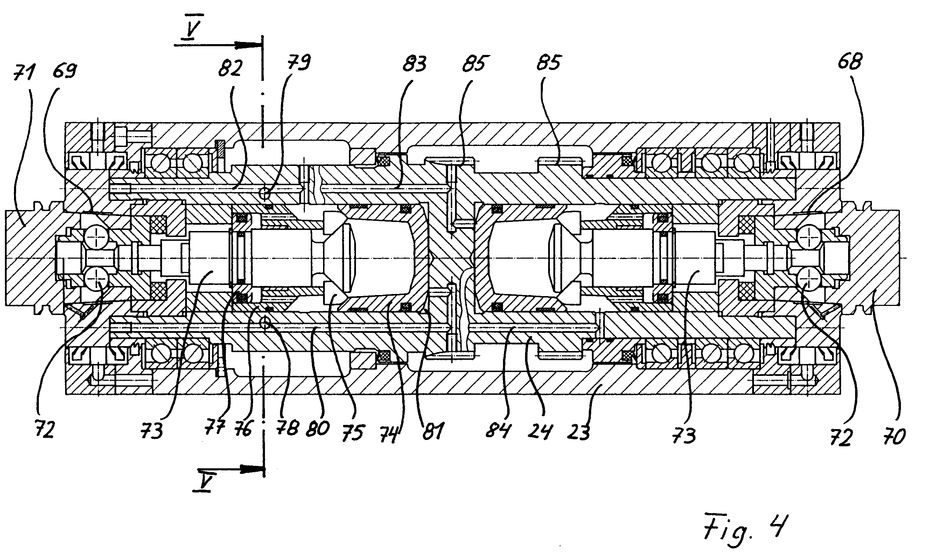

Fig. 4 zeigt einen Querschnitt durch die im Querschlitten 23 gelagerte Werkzeugspindel 24, die zwei Kurzkegelwerkzeugaufnahmen 68,69 aufweist, in die kegelige Hohlschaftwerkzeughalter 70,71 eingesetzt und mit handelsüblichen Klemmeinrichtungen 72 in der Werkzeugspindel 24 geklemmt sind. Jede Klemmeinrichtung 72 wird durch eine Zugstange 73 betätigt, auf die ein hydraulisch beaufschlagter Schieber 74 über Keilelemente 75 einwirkt, die an einer Ringhülse 76 anliegen. In der Ringhülse 76 ist ein Ausstoßkolben 77 angeordnet. Von den Kupplungsleitungen 78,79, die während der Spindelrotation von der Druckmittelquelle getrennt sind, führen eine Spannleitung 80 zum durch den Schieber 74 gebildeten Zylinderraum 81 und eine Entspannleitung 82 zum Ausstoßkolben 77.

Die rechte und die linke Klemmeinrichtung 72 und die auf die Zugstangen wirkenden Spanneinrichtugnen sind identisch aufgebaut und spiegelbildlich angeordnet. Lediglich die Spannleitung 83 und die Entspannleitung 84 sind in einer zu den Leitungen 80,82 um 180 Grad versetzten Ebene angeordnet, ebenso wie die für die rechte Spindelseite nicht dargestellten Kupplungsleitungen, die in derselben Querschnittsebene liegen wie die Kupplungsleitungen 78,79. Die Werkzeugspindel 24 wird über die Stirnverzahnungen 85 in Rotation versetzt.

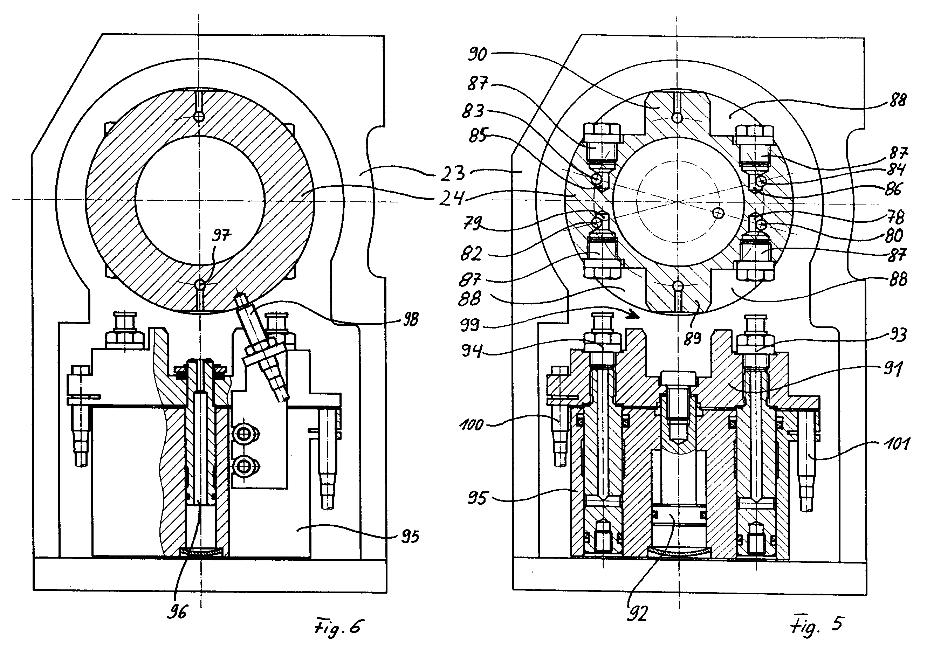

Die Querschnittsform der Werkzeugspindel 24 im Bereich der Kupplungsleitungen 78,79 ist aus Fig. 5 erkennbar. Die um 180 Grad versetzt angordnete Spannleitung 83 und Entspannleitung 84 sind ebenfalls mit Kupplungsleitungen 85,86 verbunden. Alle Kupplungsleitungen 82,83,85,86 sind mit Ventileinsätzen 87 versehen, die die Leitungen im unterbrochenen Zustand leckagefrei verschließen.

In der Werkzeugspindel 24 werden durch Ausnehmungen 88 zwei gegenüberliegende Stege 89,90 gebildet, die von einer Gabel 91 erfaßt werden können. Die Gabel 91 wird durch einen Kolben 92 in Richtungen der Werkzeugspindel 24 verschoben. Die Gabel 91 und die Stege 89,90 bilden eine Fixiereinrichtung 99 für die Werkzeugspindel 24 in zwei Drehlagen. Gemeinsam mit der Gabel 91 werden die zwei Anschlußstücke 93,94 verschoben, die die Druckmittelquelle mit den jeweiligen Kupplungsleitungen 78,79 bzw. 85,86 verbinden. Sowohl in der Gabel 91 als auch im Gabelträger 95 ist je ein Sensor 100,101 befestigt, mit dem die beiden Endstellungen der Gabel 91 abgefragt werden, um Fehlfunktionen auszuschließen. In einer zur Druckleitungskupplungsebene unmittelbar benachbarten Querschnittsebene kann eine weitere Zuleitung 96 untergebracht sein, durch die Druckluft zum Reinigen der Werkzeugaufnahmen 68,69 einem Zufuhrkanal 97 zugeführt wird. Die Zuleitung wird ebenfalls durch die Bewegung der Gabel 91 mit dem Zuführkanal 97 gekuppelt.

Durch einen am Gabelträger 95 angeordneten berührungslosen Endschalter 98 wird die Ausgangsdrehlage der Werkzeugspindel 24 festgestellt. Ist das Signal des Endschalters vorhanden, kann die Werkzeugspindel 24 fixiert werden. Für die Indexierung der Werkzeugspindel 24 in der um 180 Grad gedrehten Position wird der im Werkzeugspindelmotor 27 integrierte Winkeldrehgeber benutzt. Auf diese Weise kann die Werkzeugspindel 24 zum Schalten des Werkzeugturms 19 und zum Spannen und Entspannen der Werkzeuge in den Werkzeugaufnahmen 68,69 stillgesetzt werden. Die Einrichtung benötigt erheblich weniger Bauraum als vergleichbare Einrichtungen zum Werkzeugspannen benötigen wurden.
- 1: Portal
- 2: Werkzeug, Bohrwerkzeug
- 3: Werkzeug, Drehwerkzeug
- 4: Werkzeugmagazin
- 5: Doppelgreifer
- 6: Spannzange
- 7: Spannzange
- 8: Maschinenbett
- 9: Spindelkasten
- 10: Werkstückspindel
- 11: Werkstückspannfutter
- 12: Längsführung
- 13: Längsführung
- 14: Reitstock
- 15: Bettschlitten
- 16: Planführungen
- 17: Planschlitten
- 18: Schwenkachse
- 19: Werkzeugturm
- 20: Werkzeugaufnahme
- 21: Drehwerkzeuge
- 22: Querführungen
- 23: Querschlitten
- 24: Werkzeugspindel
- 25: Werkzeug, Fräswerkzeug
- 26: Werkstückdrehachse
- 28: Träger
- 29: Zahnriementrieb
- 30: Motorwelle
- 31: Zahnritzel
- 32: Zahnriemen
- 33: Hülse
- 34: Antriebszahnrad
- 35: Wälzlager
- 36: Vielkeilwelle
- 37: Abdeckung
- 38: Abtriebskegelrad
- 39: Vielkeilwelle
- 40: Antriebskegelrad
- 41: Welle
- 42: Welle
- 43: Kegelrad
- 44: Kegelrad
- 45: Verzahnung
- 46: Schiebehülse
- 47: Kegelgetriebe
- 48: Winkelgetriebe
- 49: Winkelgetriebe
- 50: Spannbacken
- 51: Stirnzahnrad
- 52: Stirnzahnrad
- 53: Werkzeughalter
- 54: Werkzeugspanneinrichtung
- 55: Wälzlager
- 56: Wälzlager
- 57: Planzahnringe,Indexiereinrichtung
- 58: Gewindespindel
- 59: Zahnriementrieb
- 60: Vorschubmotor
- 61: Vielkeilbuchse
- 62: Keilwelle
- 63: Lagerbock
- 64: Lagerbock
- 65: Stütze
- 66: Rollenschuh
- 67: Führungsleiste
- 68: Kurzkegelwerkzeugaufnahme
- 69: Kurzkegelwerkzeugaufnahme
- 70: Hohlschaftwerkzeughalter
- 71: Hohlschaftwerkzeughalter
- 72: Klemmeinrichtung
- 73: Zugstange
- 74: Schieber
- 75: Keilelement
- 76: Ringhülse
- 77: Ausstoßkolben
- 78: Kupplungsleitung
- 79: Kupplungsleitung
- 80: Spannleitung
- 81: Zylinderraum
- 82: Entspannleitung
- 83: Spannleitung
- 84: Entspannleitung
- 85: Kupplungsleitung
- 86: Kupplungsleitung
- 87: Ventileinsatz
- 88: Ausnehmung
- 89: Steg
- 90: Steg
- 91: Gabel
- 92: Kolben
- 93: Anschlußstück
- 94: Anschlußstück
- 95: Gabelträger
- 96: Zuleitung
- 97: Zuführkanal
- 98: Endschalter
- 99: Fixiereinrichtung
- 100: Sensor
- 101: Sensor

## Patentansprüche

1. Drehmaschine mit einer Werkstückspindel (10) und mit einem Maschinenbett (8), das Längsführungen (12,13) in Achsrichtung der Werkstückspindel (10) aufweist, mit einem Bettschlitten (15), der auf diesen Längsführungen (12) verschieblich ist und der seinerseits Planführungen (16) für einen quer zur Werkstückspindelachse verschieblichen Planschlitten (17) trägt, mit einem auf dem Planschlitten (17) aufgebauten Werkzeugturm (19), der um eine Achse drehbar ist, die senkrecht zu den Plan- und Längsführungen (12, 16) ausgerichtet ist, wobei der Werkzeugturm (19) auf einer Seite eine Aufnahme (20) für nicht rotierende Werkzeuge (21) und auf der gegenüberliegenden Seite Querführungen (22) für einen Querschlitten (23) tragt, der parallel zur Schwenkachse des Werkzeugturms (19) verschieblich ist und eine rotierend antreibbare Werkzeugspindel (24) trägt, dadurch gekennzeichnet, daß Längsführungen (12,13) des Maschinenbetts (8) gegenüber der horizontalen geneigt angeordnet sind, daß der die Werkzeugspindel (24) treibende Werkzeugspindelmotor (27) gleichzeitig die Schwenkbewegung des Werkzeugturms (19) bewirkt und daß der Werkzeugspindelmotor (27) am Bettschlitten (15) angeordnet ist.

2. Drehmaschine nach Anspruch 1 dadurch gekennzeichnet, daß die Werkzeugspindel (24) mit dem am Bettschlitten (15) befestigten Werkzeugspindelmotor (27) über mindestens zwei Winkelgetriebe (48,49) verbunden ist, von denen jeweils ein Getrieberad (38,45) verschieblich auf einer drehmomentübertragenden Schiebewelle angeordnet ist.

3. Drehmaschine nach Anspruch 1 dadurch gekennzeichnet, daß die Werkzeugspindel (24) mit dem am Bettschlitten (15) befestigten Werkzeugspindelmotor (27) über Gelenkwellen verbunden ist.

4. Drehmaschine nach Anspruch 2 dadurch gekennzeichnet, daß die Werkzeugspindel (24) mit dem am Bettschlitten (15) befestigten Werkzeugspindelmotor (27) über mindestens zwei Kegelradpaare (38,40,44,45) verbunden ist, die über Keilwellen (39,62) miteinander und mit dem Werkzeugspindelmotor (27) in Verbindung stehen.

5. Drehmaschine nach Anspruch 4 dadurch gekennzeichnet, daß mindestens eine Keilwelle (62) mit dem Planschlitten (17) und/oder dem Querschlitten (23) fest verbunden ist und sich mit dem jeweiligen Schlitten zusammen gegenüber dem Maschinenbett (8) verschiebt.

6. Drehmaschine nach Anspruch 4 dadurch gekennzeichnet, daß mindestens ein Kegelrad (38,45) eines Winkelgetriebes (48,49) auf einer der Keilwellen (39,62) verschieblich aber undrehbar gegenüber dieser angeordnet ist.

7. Drehmaschine nach Anspruch 1 dadurch gekennzeichnet, daß die Werkzeugspindel (24) während der Schwenkbewegung des Werkzeugturms (19) an einer Drehung um ihre Rotationsachse gehindert ist und daß die die Drehlage des Werkzeugturms (19) bestimmende Indexiereinrichtung (57) gelöst ist.

8. Drehmaschine nach Anspruch 7 dadurch gekennzeichnet, daß die Werkzeugspindel (24) durch eine Bremse an ihrer Drehung gehindert ist.

9. Drehmaschine nach Anspruch 7 dadurch gekennzeichnet, daß die Werkzeugspindel (24) numerisch gesteuert in bestimmter Drehlage stillgesetzt wird und durch ein an der Werkzeugspindel (24) angreifendes, formschlüssiges Element (91) an ihrer Drehung gehindert wird, während der Werkzeugturm (19) geschwenkt wird.

10. Drehmaschine nach Anspruch 1 mit einer Werkzeugspindel, die an beiden Spindelenden Aufnahmen für rotierend antreibbare Werkzeuge aufweist, dadurch gekennzeichnet, daß jeder Werkzeugaufnahme (68,69) Werkzeugspanneinrichtungen (72) zugeordnet sind, die über Druckleitungen (80,82,83,84) mit Druckmedium versorgt werden und daß die jeweiligen Spann- und Entspannleitungen des Druckmediums für jede Spanneinrichtung (72) in einer bestimmten, voneinander verschiedenen Werkzeugspindel-Drehlage mit der Druckerzeugungseinrichtung bei stillgesetzter Werkzeugspindel (24) verbunden sind.

11. Drehmaschine nach Anspruch 10 dadurch gekennzeichnet, daß die Werkzeugspannung der Werkzeugaufnahmen (68,69) während der Werkzeugspindelrotation durch Federkraft aufrechterhalten wird.

12. Drehmaschine nach Anspruch 10 dadurch gekennzeichnet, daß die Zu- und Ableitungen für das Druckmedium in das formschlüssige Element (91) integriert sind und mit der Fixiereinrichtung (99) durch die Bewegung des formschlüssigen Elements (91) gekuppelt werden.

13. Drehmaschine nach Anspruch 1 dadurch gekennzeichnet, daß sich das freikragende Ende des Bettschlittens (15) über eine Momentenstütze (65) am Maschinenbett (8) abstützt.

14. Drehmaschine nach Anspruch 13 dadurch gekennzeichnet, daß das Maschinenbett (8) an der Rückseite eine Führungsleiste (67) aufweist, an der sich der Bettschlitten (15) über einen Rollenschuh (66) abstützt.
